# EUROPEAN PATENT APPLICATION

(11) **EP 4 422 052 A1**
(43) Date of publication of application: **28.08.2024**
(21) Application number: 23158410.3
(22) Date of filing: 24.02.2023
(51) Int. Cl.: H02M 3/00, H02M 1/00, H02M 3/335, H05B 45/30

(54) **INTEGRATED CIRCUIT FOR CONTROL OF AN ISOLATING RESONANT LED CONVERTER, AND METHOD OF OPERATING THE INTEGRATED CIRCUIT**

(71) Applicant: Tridonic GmbH & Co. KG, 6851 Dornbirn (AT)
(72) Inventor: Schneider, Miguel Philipp, 6850 Dornbirn (AT)
(74) Representative: Rupp, Christian

(57) **Abstract**

Disclosed is an integrated circuit (1) for control of an isolating resonant LED converter (2). The LED converter (2) comprises an active full wave bridge rectifier (23) and an isolating transformer (221, 222). The active full wave bridge rectifier (23) comprises a first switch (231, Q1) and a second switch (232, Q2) in series, and a third switch (233, Q3) and a fourth switch (234, Q4) in series. The isolating transformer (221, 222), comprises a secondary winding (222), interconnecting a common terminal of the first switch (231, Q1) and the second switch (232, Q2), and a common terminal of the third switch (233, Q3) and the fourth switch (234, Q4). The integrated circuit (1) is configured to selectively control the LED converter (2) as a resonant hybrid Flyback converter or as a resonant LLC converter in response to a first value (S 1) or a second value (S2) of an external signal (S), respectively. This offers the benefits of different circuit topologies within one LED converter.

## Description

### Technical Field

The present disclosure relates to lighting technology, and in particular to an integrated circuit for control of an isolating resonant LED converter, to an arrangement comprising the converter and the integrated circuit, to a luminaire comprising the arrangement, and to a method of operating the integrated circuit.

### Background Art

A DC/DC stage of a typical LED converter is tailored for the requirements of a specific application. This results in one of the known circuit topologies such as step-down ("Buck"), Flyback ("Buck-Boost"), resonant ("LLC", "LCC") etc. As such, different requirements or applications tend to result in different DC/DC stages and LED converters.

### Summary

It is an object to overcome the above-mentioned and other drawbacks.

The foregoing and other objects are achieved by the features of the independent claims. Further implementation forms are apparent from the dependent claims, the description and the figures.

A first aspect of the present disclosure relates to an integrated circuit for control of an isolating resonant LED converter. The LED converter comprises an active full wave bridge rectifier and an isolating transformer. The active full wave bridge rectifier comprises a first switch and a second switch in series, and a third switch and a fourth switch in series. The isolating transformer, comprises a secondary winding, interconnecting a common terminal of the first switch and the second switch, and a common terminal of the third switch and the fourth switch. The integrated circuit is configured to selectively control the LED converter as a resonant hybrid Flyback converter or as a resonant LLC converter in response to a first value or a second value of an external signal, respectively.

To selectively control the LED converter as the resonant hybrid Flyback converter in response to the first value of the external signal, the integrated circuit may be configured to deactivate the second switch and the third switch; activate the fourth switch; and selectively activate the first switch in accordance with a direction of current flow through the secondary winding. This is just one example for the deactivation/activation of the switched. E.g. the order may also be vice versa: activate the first switch; and selectively activate the fourth switch in accordance with a direction of current flow through the secondary winding.

To selectively control the LED converter as the resonant LLC converter in response to the second value of the external signal, the integrated circuit may be configured to selectively activate either the first switch and the fourth switch, or the second switch and the third switch, in accordance with a direction of current flow through the secondary winding.

The first value of the external signal may be indicative of a first wattage of the LED converter; the second value of the external signal may be indicative of a second wattage of the LED converter of less than the first wattage; and the selective control of the LED converter may be exercisable once only.

The first value of the external signal may be indicative of a first output voltage of the LED converter; the second value of the external signal may be indicative of a second output voltage of the LED converter of more than the first output voltage; and the selective control of the LED converter may be exercisable upon a change of an LED load.

A second aspect of the present disclosure relates to an arrangement, comprising an isolating resonant LED converter, and an integrated circuit of the first aspect for control of the LED converter. The LED converter comprises an active full wave bridge rectifier and an isolating transformer. The active full wave bridge rectifier comprises a first switch and a second switch in series, and a third switch and a fourth switch in series. The isolating transformer, comprises a secondary winding, interconnecting a common terminal of the first switch and the second switch, and a common terminal of the third switch and the fourth switch.

A third aspect of the present disclosure relates to a luminaire, comprising an arrangement of the second aspect; and an LED load.

A fourth aspect of the present disclosure relates to a method of operating an integrated circuit for control of an isolating resonant LED converter. The LED converter comprises an active full wave bridge rectifier and an isolating transformer. The active full wave bridge rectifier comprises a first switch and a second switch in series, and a third switch and a fourth switch in series. The isolating transformer, comprises a secondary winding, interconnecting a common terminal of the first switch and the second switch, and a common terminal of the third switch and the fourth switch. The method comprises selectively controlling the LED converter as a resonant hybrid Flyback converter or as a resonant LLC converter in response to a first value or a second value of an external signal, respectively.

Selectively controlling the LED converter as the resonant hybrid Flyback converter in response to the first value of the external signal may comprise deactivating the second switch and the third switch; activating the fourth switch; and selectively activating the first switch in accordance with a direction of current flow through the secondary winding.

Selectively controlling the LED converter as the resonant LLC converter in response to the second value of the external signal may comprise: selectively activating either the first switch and the fourth switch, or the second switch and the third switch, in accordance with a direction of current flow through the secondary winding.

The first value of the external signal may be indicative of a first wattage of the LED converter; the second value of the external signal may be indicative of a second wattage of the LED converter of less than the first wattage; and the selective control of the LED converter may be exercisable once only.

The first value of the external signal may be indicative of a first output voltage of the LED converter; the second value of the external signal may be indicative of a second output voltage of the LED converter of more than the first output voltage; and the selective control of the LED converter may be exercisable upon a change of an LED load.

The method may be performed by the integrated circuit of the first aspect.

### Advantageous Effects

The present disclosure provides an integrated circuit which effectively enables an operation of a DC/DC stage of an LED converter in accordance with more than one circuit topology. This offers the benefits of different circuit topologies within one LED converter, without additional circuit components, circuit footprint, design effort etc. The implementation is cost-efficient and flexible in design.

Advantageously, a converter efficiency and overall performance may be kept high over a wide load range / output window, since each topology mode is designed to achieve best possible performance over the load range it is operating in.

The technical effects and advantages described above in relation with the integrated circuit equally apply to the arrangement and the luminaire comprising the integrated circuit, and to the method having corresponding features.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a luminaire of the third aspect, comprising an arrangement of the second aspect and an LED load;
- FIGs. 2-4: illustrate the LED converter 2 of FIG. 1 being selectively controlled as a resonant hybrid Flyback converter in response to a first value S₁ of an external signal S;
- FIGs. 5-7: illustrate the LED converter 2 of FIG. 1 being selectively controlled as a resonant LLC converter in response to a second value S₂ of the external signal S; and
- FIG. 8: illustrates a flow chart of a method 4 of operating the integrated circuit 1 of FIG. 1.

### Detailed Descriptions of Drawings

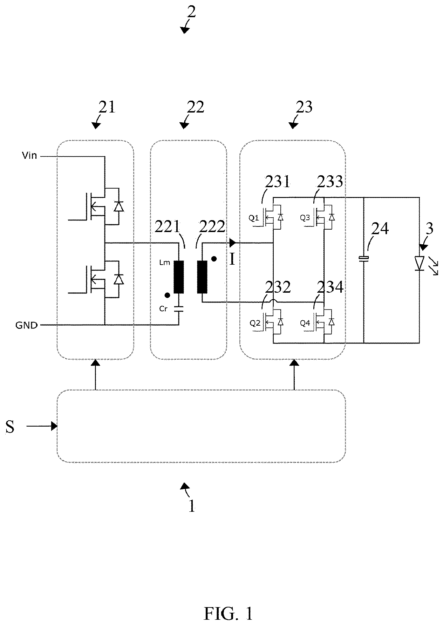

FIG. 1 illustrates a luminaire 1, 2, 3 of the third aspect, comprising an arrangement 1, 2 of the second aspect and an LED load 3.

The arrangement 1, 2, of the second aspect comprises an isolating resonant LED converter 2 and an integrated circuit 1 of the first aspect for control of the LED converter 2.

The LED converter 2 of FIG. 1 includes a DC-DC stage 21 - 24. More specifically, the LED converter 2 comprises a half-wave bridge inverter 21, a resonant tank 22, an active full wave bridge rectifier 23, and an output capacitance 24.

The half-wave bridge inverter 21 comprises two switches in series across a DC supply voltage Vᵢₙ. and being operable by the integrated circuit 1 in mutual exclusion. In accordance with FIG. 1, the switches of the half-wave bridge inverter 21 may comprise power MOSFETs, in particular.

The resonant tank 22 comprises an isolating transformer 221, 222. The isolating transformer 221, 222, comprises a primary winding 221, including a main inductance and a leakage inductance, and a secondary winding 222. A resonance capacitor is connected in series to the primary winding 221.

The active full wave bridge rectifier 23 comprises a first switch 231, Q1 and a second switch 232, Q2 in series, and a third switch 233, Q3 and a fourth switch 234, Q4 in series. In accordance with FIG. 1, the switches 231 - 234, Q1 - Q4 may comprise power MOSFETs, in particular.

In accordance with FIG. 1, the secondary winding 222 interconnects a common terminal of the first switch 231, Q1 and the second switch 232, Q2, and a common terminal of the third switch 233, Q3 and the fourth switch 234, Q4.

The integrated circuit 1 may comprise a digital processing circuitry such as an application-specific integrated circuit (ASIC), a field-programmable gate array (FPGA), a microcontroller (µC) and the like.

The integrated circuit 1 is configured to selectively control the LED converter 2 as a resonant hybrid Flyback converter or as a resonant LLC converter in response to a first value S₁ or a second value S₂ of an external signal S, respectively.

Since the resonant hybrid Flyback converter or resonant LLC converter topologies merely differ in the setup and functionality of the full wave bridge rectifier 23, it is possible to set the topology during manufacture or swap the topology during operation without changing components in the circuit, but just by appropriately controlling the rectifier 23.

This approach offers the possibility to combine the benefits of both topologies in a single converter without additional effort and costs.

The selective control of the LED converter 2 may be exercisable once only, during manufacture, for example, in order to differentiate a wattage.

More specifically, the wattage may be set in production by software (e.g., to 38. 5W or 55W). Depending on the wattage settings the LED converter 2 may be selectively controlled as the resonant LLC converter topology or as the resonant hybrid Flyback converter topology. Once the settings are done, the converter constantly remains in the topology mode set. This is defined once and cannot be changed by user.

In this connection, the first value S₁ of the external signal S relating to the resonant hybrid Flyback converter topology may be indicative of a first wattage of the LED converter 2, e.g. 55 W, and the second value S₂ of the external signal S relating to the resonant LLC converter topology may be indicative of a second wattage of the LED converter 2 of less than the first wattage, e.g., 38,5W.

Alternatively, the selective control of the LED converter 2 may be exercisable upon a detection or change of the LED load 3.

For example, upon detection of an LED load - possibly during start-up - the LED converter 2 may selectively be controlled as the appropriate converter topology. E.g., a light load (output voltage V_{LED} < 20V) may be operated in resonant hybrid Flyback mode and a high load (output voltage V_{LED} > 20V) in resonant LLC mode. It is also conceivable that the topology is swapped during operation, for example in accordance with a change of dim level or load.

In other words, the first value S₁ of the external signal S relating to the resonant hybrid Flyback converter topology may be indicative of a first output voltage of the LED converter 2, e.g. < 20V, and the second value S₂ of the external signal S relating to the resonant LLC converter topology may be indicative of a second output voltage of the LED converter 2 of more than the first output voltage, e.g., > 20V.

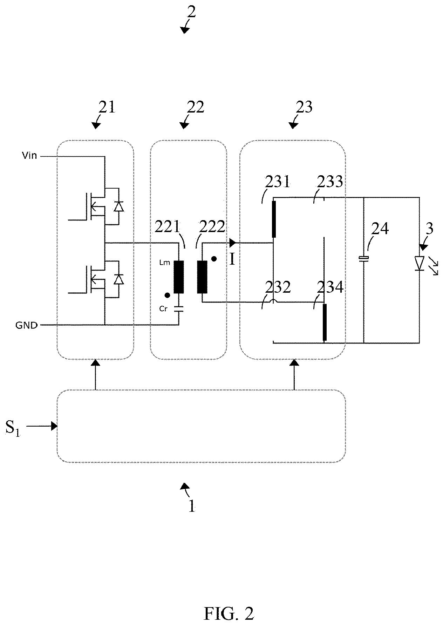

FIGs. 2-4 illustrate the LED converter 2 of FIG. 1 being selectively controlled as a resonant hybrid Flyback converter in response to a first value S₁ of an external signal S.

During resonant hybrid Flyback operation, the second and third switches 232 - 233, Q2 - Q3 are constantly turned off (deactivated, non-conducting) and the fourth switch 234, Q4 is constantly turned on (activated, conducting), whereas the first switch 231, Q1 operates as synchronous rectifier.

To selectively control the LED converter 2 as the resonant hybrid Flyback converter in response to the first value S₁ of the external signal S, the integrated circuit 1 may be configured to deactivate the second switch 232, Q2 and the third switch 233, Q3 constantly (note open circuits 232, 233); activate the fourth switch 234, Q4 constantly (note short circuit 234); and selectively activate the first switch 231, Q1 in accordance with a direction of current flow I through the secondary winding 222. An alternative approach is to activate the first switch; and selectively activate the fourth switch in accordance with a direction of current flow through the secondary winding.

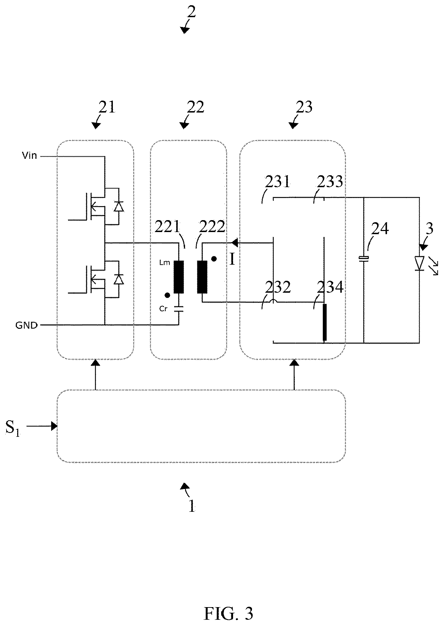

In accordance with FIG. 2, the first switch 231, Q1 is activated (note short circuit 231) such that the current flow I through the secondary winding 222 is enabled, whereas in accordance with FIG. 3, the first switch 231, Q1 is deactivated such that the reversed current flow I through the secondary winding 222 is disabled.

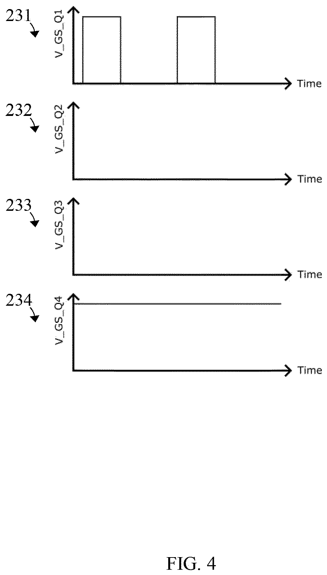

FIG. 4 summarizes the gate control signals of the switches 231 - 234 when the LED converter 2 is selectively controlled as the resonant hybrid Flyback converter.

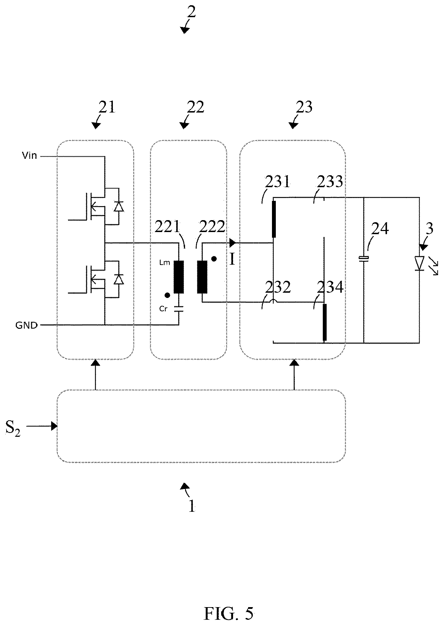

FIGs. 5-7 illustrate the LED converter 2 of FIG. 1 being selectively controlled as a resonant LLC converter in response to a second value S₂ of the external signal S.

During LLC operation the rectifier 23 is operated as a classical active bridge rectifier.

To selectively control the LED converter 2 as the resonant LLC converter in response to the second value S₂ of the external signal S, the integrated circuit 1 may be configured to selectively activate either the first switch 231, Q1 and the fourth switch 234, Q4, or the second switch 232, Q2 and the third switch 233, Q3, in accordance with a direction of current flow I through the secondary winding 222.

That is to say, the first switch 231, Q1 and the fourth switch 234, Q4 may be activated when the second switch 232, Q2 and the third switch 233, Q3 are deactivated, and vice versa.

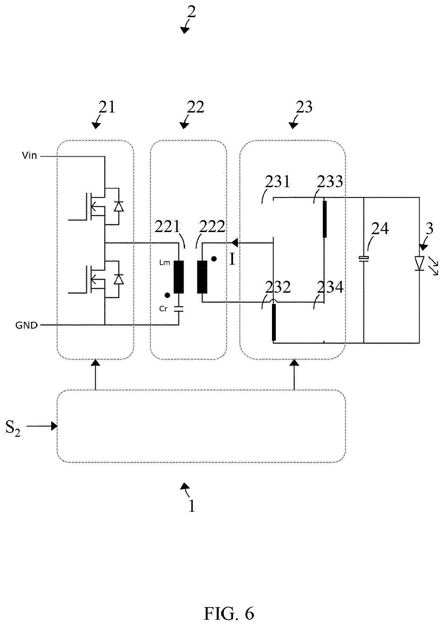

In accordance with FIG. 5, the first switch 231, Q1 and the fourth switch 234, Q4 are activated (note short circuits 231, 234) and the second switch 232, Q2 and the third switch 233, Q3 are deactivated such that the current flow I through the secondary winding 222 is enabled, whereas in accordance with FIG. 6, the first switch 231, Q1 and the fourth switch 234, Q4 are deactivated and the second switch 232, Q2 and the third switch 233, Q3 are activated such that the reversed current flow I through the secondary winding 222 is enabled.

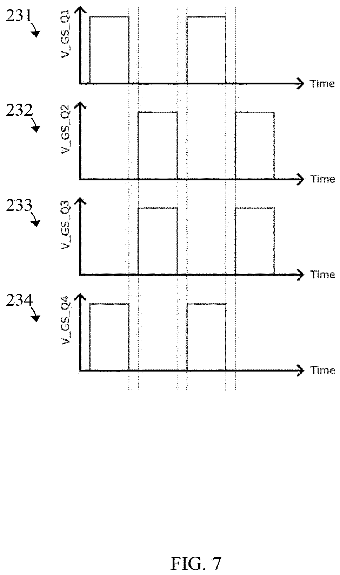

FIG. 7 summarizes the gate control signals of the switches 231 - 234 when the LED converter 2 is selectively controlled as the resonant LLC converter.

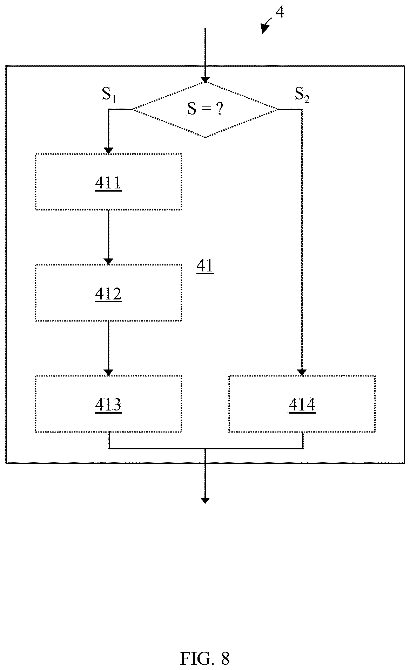

FIG. 8 illustrates a flow chart of a method 4 of operating the integrated circuit 1 of FIG. 1.

The method 4 may be performed by the integrated circuit 1 of the first aspect (see FIG. 1 above).

In its broadest implementation, the method 4 comprises a step of selectively controlling 41 the LED converter 2 as a resonant hybrid Flyback converter or as a resonant LLC converter in response to a first value S₁ or a second value S₂ of an external signal S, respectively.

A first more specific implementation may involve selectively controlling 41 the LED converter 2 as the resonant hybrid Flyback converter in response to the first value S₁ of the external signal S. This may comprise a step of deactivating 411 the second switch 232, Q2 and the third switch 233, Q3 constantly; a step of activating 412 the fourth switch 234, Q4 constantly; and a step of selectively activating 413 the first switch 231, Q1 in accordance with a direction of current flow I through the secondary winding 222 (see FIGs. 2-4 above).

Note that the steps 411 - 412 may be performed in the indicated order, in reversed order or concurrently.

A second more specific implementation may involve selectively controlling 41 the LED converter 2 as the resonant LLC converter in response to the second value S₂ of the external signal S. This may comprise a step of selectively activating 414 either the first switch 231, Q1 and the fourth switch 234, Q4, or the second switch 232, Q2 and the third switch 233, Q3, in accordance with a direction of current flow I through the secondary winding 222. (see FIGs. 5-7 above)

The selective control of the LED converter 2 may be exercisable once only, during manufacture, for example, in order to differentiate a wattage. In this connection, the first value S₁ of the external signal S relating to the resonant hybrid Flyback converter topology may be indicative of a first wattage of the LED converter 2, e.g. 55 W, and the second value S₂ of the external signal S relating to the resonant LLC converter topology may be indicative of a second wattage of the LED converter 2 of less than the first wattage, e.g., 38,5W.

The selective control of the LED converter 2 may be exercisable upon a change of the LED load 3. In this connection, the first value S₁ of the external signal S relating to the resonant hybrid Flyback converter topology may be indicative of a first output voltage of the LED converter 2, e.g. < 20V, and the second value S₂ of the external signal S relating to the resonant LLC converter topology may be indicative of a second output voltage of the LED converter 2 of more than the first output voltage, e.g., > 20V.

## Claims

1. An integrated circuit (1) for control of an isolating resonant LED converter (2),
the LED converter (2) comprising
an active full wave bridge rectifier (23), comprising
a first switch (231, Q1) and a second switch (232, Q2) in series, and
a third switch (233, Q3) and a fourth switch (234, Q4) in series; and
an isolating transformer (221, 222), comprising
a secondary winding (222), interconnecting
a common terminal of the first switch (231, Q1) and the second switch (232, Q2), and
a common terminal of the third switch (233, Q3) and the fourth switch (234, Q4);
the integrated circuit (1) being configured
- to selectively control the LED converter (2) as a resonant hybrid Flyback converter or as a resonant LLC converter in response to a first value (S₁) or a second value (S₂) of an external signal (S), respectively.

2. The integrated circuit (1) of claim 1,
to selectively control the LED converter (2) as the resonant hybrid Flyback converter in response to the first value (S₁) of the external signal (S), the integrated circuit (1) being configured to
- deactivate the second switch (232, Q2) and the third switch (233, Q3);
- activate the fourth switch (234, Q4), and
- selectively activate the first switch (231, Q1) in accordance with a direction of current flow (I) through the secondary winding (222), or
- activate the first switch; and selectively activate the fourth switch in accordance with a direction of current flow through the secondary winding.

3. The integrated circuit (1) of claim 1 or claim 2,
to selectively control the LED converter (2) as the resonant LLC converter in response to the second value (S₂) of the external signal (S), the integrated circuit (1) being configured to
- selectively activate either the first switch (231, Q1) and the fourth switch (234, Q4), or the second switch (232, Q2) and the third switch (233, Q3), in accordance with a direction of current flow (I) through the secondary winding (222).

4. The integrated circuit (1) of any one of the claims 1 to 3,
the first value (S₁) of the external signal (S) being indicative of a first wattage of the LED converter (2);
the second value (S₂) of the external signal (S) being indicative of a second wattage of the LED converter (2) of less than the first wattage; and
the selective control of the LED converter (2) being exercisable once only.

5. The integrated circuit (1) of any one of the claims 1 to 3,
the first value (S₁) of the external signal (S) being indicative of a first output voltage of the LED converter (2);
the second value (S₂) of the external signal (S) being indicative of a second output voltage of the LED converter (2) of more than the first output voltage; and
the selective control of the LED converter (2) being exercisable upon a change of an LED load (3).

6. An arrangement (1, 2), comprising
an isolating resonant LED converter (2), comprising
an active full wave bridge rectifier (23), comprising
a first switch (231, Q1) and a second switch (232, Q2) in series, and
a third switch (233, Q3) and a fourth switch (234, Q4) in series; and
an isolating transformer (221, 222), comprising
a secondary winding (222), interconnecting
a common terminal of the first switch (231, Q1) and the second switch (232, Q2), and
a common terminal of the third switch (233, Q3) and the fourth switch (234, Q4); and
an integrated circuit (1) of any one of the preceding claims for control of the LED converter (2).

7. A luminaire (1, 2, 3), comprising
an arrangement (1, 2) of claim 6; and
an LED load (3).

8. A method (4) of operating an integrated circuit (1) for control of an isolating resonant LED converter (2),
the LED converter (2) comprising
an active full wave bridge rectifier (23), comprising
a first switch (231, Q1) and a second switch (232, Q2) in series, and
a third switch (233, Q3) and a fourth switch (234, Q4) in series; and
an isolating transformer (221, 222), comprising
a secondary winding (222), interconnecting
a common terminal of the first switch (231, Q1) and the second switch (232, Q2), and
a common terminal of the third switch (233, Q3) and the fourth switch (234, Q4);
the method (4) comprising
- selectively controlling (41) the LED converter (2) as a resonant hybrid Flyback converter or as a resonant LLC converter in response to a first value (S₁) or a second value (S₂) of an external signal (S), respectively.

9. The method (4) of claim 8,
selectively controlling (41) the LED converter (2) as the resonant hybrid Flyback converter in response to the first value (S₁) of the external signal (S) comprising:
- deactivating (411) the second switch (232, Q2) and the third switch (233, Q3);
- activating (412) the fourth switch (234, Q4); and
- selectively activating (413) the first switch (231, Q1) in accordance with a direction of current flow (I) through the secondary winding (222).

10. The method (4) of claim 8 or claim 9,
selectively controlling (41) the LED converter (2) as the resonant LLC converter in response to the second value (S₂) of the external signal (S) comprising:
- selectively activating (414) either the first switch (231, Q1) and the fourth switch (234, Q4), or the second switch (232, Q2) and the third switch (233, Q3), in accordance with a direction of current flow (I) through the secondary winding (222).

11. The method (4) of any one of the claims 8 to 10,
the first value (S₁) of the external signal (S) being indicative of a first wattage of the LED converter (2);
the second value (S₂) of the external signal (S) being indicative of a second wattage of the LED converter (2) of less than the first wattage; and
the selective control (41) of the LED converter (2) being exercisable once only.

12. The method (4) of any one of the claims 8 to 10,
the first value (S₁) of the external signal (S) being indicative of a first output voltage of the LED converter (2);
the second value (S₂) of the external signal (S) being indicative of a second output voltage of the LED converter (2) of more than the first output voltage; and
the selective control (41) of the LED converter (2) being exercisable upon a change of an LED load (3).

13. The method (4) of any one of the claims 8 to 12,
being performed by the integrated circuit (1) of any one of the claims 1 to 5.
